# EUROPÄISCHE PATENTSCHRIFT

(11) **EP 1 051 238 B1**
(45) Veröffentlichungstag und Bekanntmachung des Hinweises auf die Patenterteilung: **23.10.2002**
(21) Anmeldenummer: 99972944.5
(22) Anmeldetag: 01.12.1999
(51) Int. Cl.: B01J 2/04, C22B 7/04, C04B 5/00

(54) **VERFAHREN ZUM GRANULIEREN VON FLÜSSIGEN SCHLACKENSCHMELZEN SOWIE VORRICHTUNG ZUR DURCHFÜHRUNG DIESES VERFAHRENS**
METHOD FOR GRANULATING A LIQUID SLAG BATH AND DEVICE FOR CARRYING OUT THE METHOD
PROCEDE POUR GRANULER DES BAINS DE LAITIER LIQUIDES, AINSI QUE DISPOSITIF POUR LA MISE EN OEUVRE DE CE PROCEDE

(30) Priorität: 01.12.1998 AT 202998; 23.03.1999 AT 54399
(43) Veröffentlichungstag der Anmeldung: 15.11.2000
(73) Patentinhaber: Holcim Ltd., 8645 Jona (CH)
(72) Erfinder: EDLINGER, Alfred, CH-5400 Baden (CH)
(74) Vertreter: Haffner, Thomas M., Dr.
(86) Internationale Anmeldenummer: AT9900292
(87) Internationale Veröffentlichungsnummer: WO00032306

(56) Entgegenhaltungen:
- WO-A-95/15402
- DE-A- 19 632 698
- DE-C- 4 032 518
- FR-A- 2 284 677

## Beschreibung

Die Erfindung bezieht sich auf ein Verfahren zum Granulieren von flüssigen Schlackenschmelzen, insbesondere Hochofenschlacke, bei welcher die Schmelze über einen Schlackentundish in eine Kühlkammer ausgestossen wird und zum Ausstoß der flüssigen Schlacke Fluid unter Druck, insbesondere Druckgas, Dampf oder Druckwasser in Richtung des Schlackenaustritts eingepreßt wird sowie auf eine Vorrichtung zur Durchführung dieses Verfahrens.

Zum Granulieren und Zerkleinern von flüssigen Schlacken wurde bereits vorgeschlagen, diese mit Dampf oder Treibgas in Granulierräume auszustoßen, wobei in der Folge eine weitere Zerkleinerung auch in Strahlenmühlen unter Verwendung von Treibgasstrahlen zum Einsatz gelangte. Ausgehend von Schlackentemperaturen zwischen 1400° und 1600° C besteht aufgrund der relativ hohen Temperaturdifferenz zwischen dem Treibgasstrahl und der flüssigen Schlacke die Gefahr der Ausbildung mehr oder minder großer Agglomerate sowie die Gefahr einer Fadenbildung, welche in der Folge den Zerkleinerungsaufwand erhöht und die Abkühlgeschwindigkeit empfindlich verringert. Den bisherigen Vorschlägen lag hiebei vorrangig die Aufgabe zugrunde, die Abkühlung der flüssigen Schlacken möglichst rasch durchzuführen, wobei derartige Vorschläge naturgemäß durch Agglomeratbildung und Fadenbildung beeinträchtigt wurden.

Gemäß einem weiteren unveröffentlichten Vorschlag der Anmelderin wurde die flüssige Schlacke mit Verbrennungsabgasen in den Granulierraum ausgestossen, um die Gefahr eines Verlegens der Schlackenaustrittsöffnung aus dem Schlackentundish durch erstarrende Schlacke zu reduzieren. Bei einer derartigen Vorgangsweise gelangen die in den Granulierraum eingestossenen Schlackenpartikel mit wesentlich höherer Temperatur in eine nachgeschaltete Kühlzone, wobei die höheren Temperaturen eine geringere Schlackenviskosität und eine Verringerung der Oberflächenspannung der Schlackentröpfchen zur Folge haben, sodaß eine feinere Zerteilung der Schlackentröpfchen beim Eintreten in die Kühlzone erzielt wird. Die feine Dispersion von Schlackentröpfchen führt dabei zu entsprechend kleinen Tröpfchen mit relativ hoher spezifischer Oberfläche, sodaß die Abkühlung in kleinerbauenden Kühlkammern erreicht werden kann. Der Einbau von Brennern im Bereich des Tundishschlackenauslaufes führt aber zu einem hohen konstruktiven und apparativen Aufwand.

Die Erfindung zielt nun darauf ab, bei der Verwendung von Fluid unter Druck zum Ausstoßen von flüssigen Schlacken aus einem Schlackentundish in eine nachgeschaltete Granulierkammer, in welcher auch eine Kühlung erfolgt, die Teilchengröße der ausgestossenen Dispersion weiter zu verringern und in weiten Grenzen an die Erfordernisse einstellbar zu machen. Insbesondere zielt die Erfindung darauf ab, derartig feinteilige Schlackentröpfchen auszubilden, welche es in der Folge ermöglichen auf das Eindüsen von Wasser zur Gänze zu verzichten und die Kühlung ausschließlich über Strahlungskühlungen zu bewirken. Zur Lösung dieser Aufgabe besteht die erfindungsgemäße Verfahrensweise im wesentlichen darin, daß der Druckfluidstrahl in ein in das Schlackenbad eintauchendes Drosselrohr mündet, dessen Unterkante in Höhenrichtung verstellbar gelagert ist. Dadurch, daß der Druckfluidstrahl in ein in das Schlackenbad eintauchendes Drosselrohr mündet, dessen Unterkante in Höhenrichtung verstellbar gelagert ist, wird es ermöglicht die aus dem Schlackentundish zuströmende flüssige Schlacke als dünnwandiger Mantel eines Schlackenstrahles zu formen, wobei durch Veränderung der Höheneinstellung der Unterkante des Drosselrohres im wesentlichen die Wandstärke eines derartigen rohrförmigen Schlackenstrahles beeinflußt werden kann. Dadurch, daß nun in der Regel koaxial ein Druckfluidstrahl mit entsprechender Temperatur, beispielsweise in Form von heißen Verbrennungsabgasen, Druckgas, Dampf oder Druckwasser, in die Achse dieses rohrförmigen Schlackenstrahles gerichtet wird, lassen sich besonders feine Zerteilungen und Dispersionen erzielen, bei welchen Teilchengrößen von unter 10 µm erzielbar sind. Derartig feine Teilchen ergeben in der Folge ein Mikrogranulat mit einer Korngrößenverteilung von 10 bis 500 µm, wobei es für die Abkühlung aufgrund der besonders feinen Zerteilung in der Regel genügt, ausschließlich Strahlungskühler zur Erstarrung der Tröpfchen heranzuziehen.

Gemäß einer bevorzugten Verfahrensweise kann der die Mündung des Druckfluidstrahles umgebende Raum des Drosselrohres unter Unterdruck gehalten werden. Durch diese Maßnahme kann eine noch feinere Zerteilung erzielt werden, wobei insbesondere dann, wenn die Zufuhr von durch den Treibstrahl mitgerissener Umgebungsluft aus dem Drosselrohr entsprechend selbst wiederum gedrosselt ist, ein pulsierender Strahl erzielt werden kann. Durch entsprechende Abstimmung der Druckverhältnisse in dem den Fluidstrahl umgebenden Raum und entsprechende Einstellung der Höhe der Unterkante des Drosselrohres kann ein gesteuerter Schwingungsvorgang ausgelöst werden, wobei jeweils eine kleine Luftmenge angesaugt wird, die zu Schwingungsimpulsen in dem die Mündung des Fluidstrahles umgebenden Raum führt, welcher als Unterdruckkammer ausgebildet ist. Dem Schlackenstrahl werden daher Impulse zur Tröpfchenbildung vermittelt, wobei periodische Druckstösse überlagert werden, welche zu einer weiteren Tropfenzerkleinerung führen. Die Impulsfrequenz kann auf die Schlackenviskosität und die Oberflächenspannung abgestimmt werden, wobei diese Impulsfrequenz durch die Länge des Drosselrohres, durch die Geschwindigkeit des Treibmediums, den Luftdurchsatz, die Druckdifferenz zwischen der Unterdruckkammer und dem im Granulierraum aufgebauten Gegendruck, die Schlackenrheologie und insbesondere die Oberflächenspannung sowie die Treibmediumtemperatur und die Wahl des Treibmediums beeinflußt werden kann. Bei entsprechender Wahl dieser Parameter lassen sich auch Ultraschallschwingungen zur Feinstzerstäubung mit Tröpfchengrößen von unter 1 µm ausbilden. Zu diesem Zweck wird das Verfahren mit Vorteil so durchgeführt, daß die in den Hohlraum des Drosselrohres eingesaugte Luftmenge zur Ausbildung von Schwingungsimpulsen bemessen ist, wobei bevorzugt der Lanze Gas bzw. Heißgas unter einem Druck von 3 bis 7 bar zugeführt wird.

Die erfindungsgemäße Einrichtung zum Granulieren von flüssigen Schlackenschmelzen, insbesondere Hochofenschlacke, bei welcher die Schmelze über einen Schlackentundish in eine Kühlkammer ausgestossen wird und zum Ausstoß der flüssigen Schlacke Fluid unter Druck, insbesondere Druckgas, Dampf oder Druckwasser in Richtung des Schlackenaustrittes mittels einer Lanze auf- oder eingebracht wird, ist im wesentlichen dadurch gekennzeichnet, daß die Lanze von einem höhenverstellbaren Drosselrohr umgeben ist, dessen Unterkante in das Schlackenbad im Tundish eintaucht und einen Drosselquerschnitt zwischen Schlackenaustritt und Schlackenbad ausbildet. Dadurch, daß ein höhenverstellbares Drosselrohr zum Einsatz gelangt, gelingt es, wie eingangs erwähnt, die Wandstärke des gebildeten rohrförmigen Schlackenstrahles entsprechend den Erfordernissen anzupassen. Um entsprechende Resonanzvorgänge und den Ausstoß überlagernde Schwingungen zu induzieren, ist mit Vorteil die Ausbildung so getroffen, daß das Drosselrohr an der dem Schlackenbad abgewandten Seite geschlossen ausgebildet ist und über ein einstellbares und verschließbares Drosselventil mit einer Gasleitung, insbesondere einer Luftleitung, verbunden ist. Je nach Stellung dieses Drosselventiles wird ein mehr oder minder kleiner Unterdruck im Drosselrohr aufrechterhalten, wobei mit Vorteil die Ausbildung so getroffen ist, daß das Drosselrohr als Resonanzrohr ausgebildet ist, dessen Länge und dessen Drosselquerschnitt zum Ansaugen von Luft zur Ausbildung von Ultraschallschwingungen dimensioniert sind.

Durch die auf diese Weise erzielbaren überaus kleinen Schlackentröpfchen kann es in der Folge genügen ausschließlich Strahlungskühler einzusetzen, wobei die Ausbildung bevorzugt so getroffen ist, daß an die Austrittsöffnung des Schlackentundish wenigstens ein Strahlungskühler und eine Austragsschleuse für Granulat angeschlossen sind.

Eine besonders intensive und kleinbauende Granulationskammer ist hiebei im wesentlichen so ausgebildet, daß ein erster Strahlungskühler als Hochdruck-Strahlungsdampfkessel für einen Druckbereich des Speisewassers zwischen 10 und 220 bar bei Temperaturen zwischen 200° und 500° C ausgelegt ist, wobei vorzugsweise ein anschließender zweiter Strahlungskühler als Konvektions-Dampfkessel ausgebildet ist. Aufgrund der hohen Wärmeflußdichte kann auch überkritischer Dampf erzeugt werden.

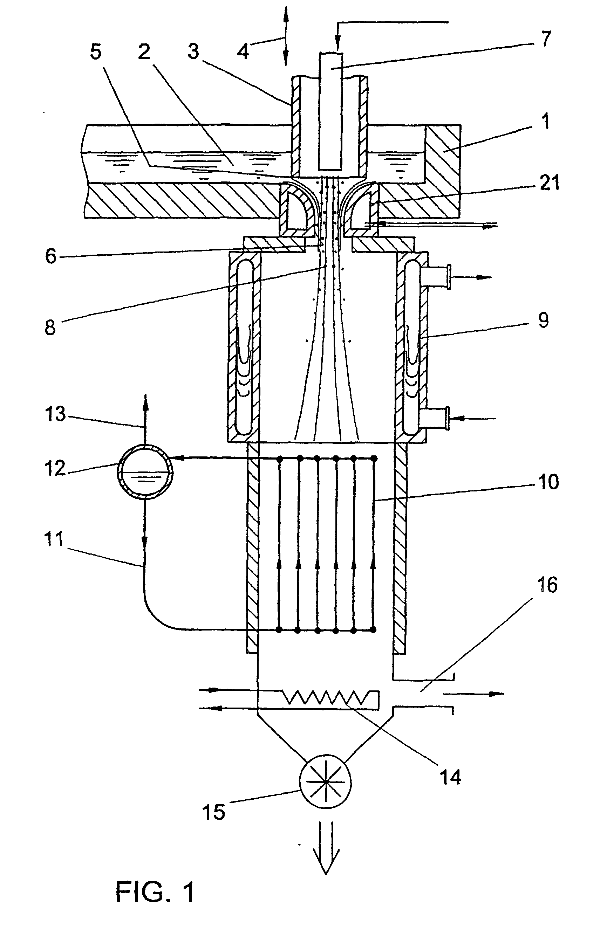

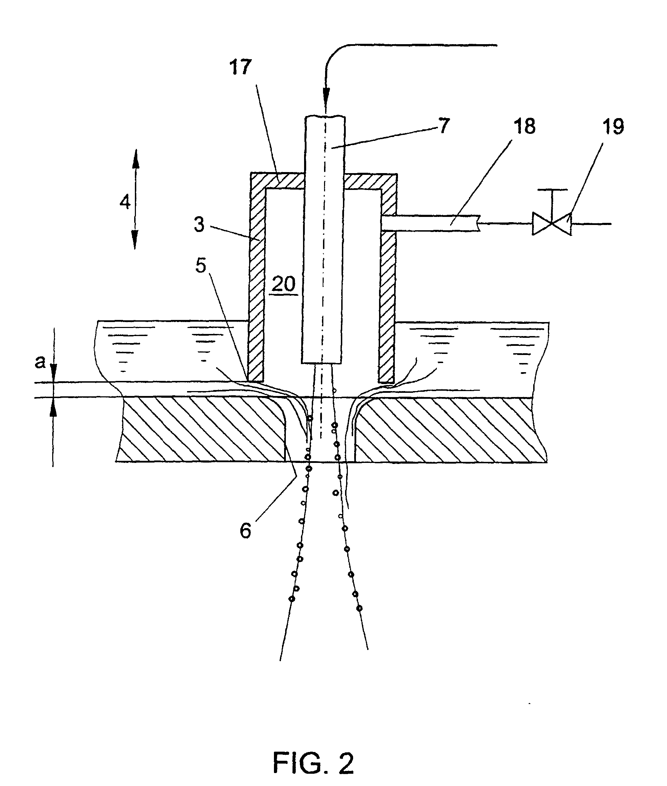

Die Erfindung wird nachfolgend anhand eines in der Zeichnung schematisch dargestellten Ausführungsbeispieles näher erläutert. In der Zeichnung zeigt Fig. 1 eine erste Ausbildung einer erfindungsgemäßen Einrichtung und Fig. 2 ein abgewandeltes Detail der Ausbildung des Drosselrohres zur Erzielung von Schwingungsimpulsen.

In Fig. 1 ist ein Schlackentundish 1 ersichtlich, in welchem flüssige Schlacke 2 auf entsprechender Temperatur gehalten ist. Die Temperatur des Schlackenbades kann hiebei bis zu 1600° C betragen. In das Schlackenbad taucht ein Drosselrohr 3 ein, welches in Richtung des Doppelpfeiles 4 höhenverstellbar ist, sodaß zwischen der Unterkante 5 und der Schlackenaustrittsöffnung 6 ein Drosselspalt verbleibt, über welchen ein rohrförmiger Schlackenstrahl ausgebildet wird.

In das Innere des Drosselrohres 3 mündet eine Gaslanze 7, über welche Fluid eingestossen werden kann. Bevorzugt wird hier Heißgas mit einem Druck von 5 bis 10 bar und einer Temperatur von über 1000° C in einer Menge von 50 bis 600 kg Heißgas pro Tonne Schlacke eingestossen. Derartiges Heißgas kann in einer druckaufgeladenen Brennkammer gebildet werden.

Die Schlackenaustrittsöffnung 6 ist als gekühlte Ringkammer 21 ausgebildet, welche mit Kühlwasser durchflossen ist.

Die auf diese Weise ausgestossenen überaus feinen Schlackentröpfchen 8 gelangen in der Folge in einen Strahlungskühler, wobei ein erster Teilbereich des Strahlungskühlers als Strahlungsdampfkessel ausgebildet ist und mit 9 bezeichnet ist. Dem Strahlungsdampfkessel wird Hochdruckspeisewasser mit einem Druck von 10 bis 220 bar zugeführt, wobei die Kühlkammern zwangsdurchströmt sind und Hochdruckdampf, beispielsweise mit Temperaturen zwischen 200° und 400° C und einem Druck zwischen 10 bis 220 bar abgezogen werden kann. Am unteren Ende dieses ersten Strahlungsdampfkessels 9 weisen die Teilchenpartikel Temperaturen von ungefähr 600° C auf, sodaß in der Folge die weitere Kühlung in einem Konvektionsdampfkessel 10 erfolgen kann. Ein derartiger Konvektionsdampfkessel kann über ein Fallrohr 11 im natürlichen Umlauf betrieben werden, wobei eine Dampftrommel 12 vorgesehen ist, aus welcher Sattdampf über eine Leitung 13 abgezogen wird. Am unteren Ende des Granulierraumes kann über einen Wärmetauscher 14 Verbrennungsluft vorgewärmt werden, wie sie für die Heißgasproduktion benötigt ist. Über eine Schleuse 15 kann Mikrogranulat mit einer durchschnittlichen Korngrößenverteilung zwischen 10 und 360 µm abgezogen werden, wobei über den Anschluß 16 weitestgehend abgekühltes Abgas bei Temperaturen von ungefähr 200° C abgezogen werden kann.

Die Teilchengrößen des Mikrogranulates kann dadurch noch weiter verkleinert werden, daß die Zerteilung der Schlackentröpfchen noch effektiver gestaltet wird. Eine derartig modifizierte Ausbildung ist in Fig. 2 schematisch erläutert. Das Drosselrohr 3 weist hiebei einen das Rohr abschließenden Boden 17 auf, welcher von der Gas- bzw. Heißgaslanze 7 dichtend durchsetzt ist. Auf diese Weise wird ein die Lanze umgebender Raum gebildet, in welchem über eine Leitung 18 und ein Drosselventil 19 gesteuert Luft zugeführt werden kann, sodaß sich in diesem Raum 20 ein entsprechender Unterdruck aufbaut. Durch den Abstand a zwischen der Unterkante 5 und dem Schlackenauslauf 6, welcher durch entsprechende Einstellung der Höhenlage im Sinne des Doppelpfeiles 4 variabel ist, läßt sich die Wandstärke des rohrförmigen Schlackenstrahles einstellen, wobei im anschließenden Kühler ein entsprechender Gegendruck aufgebaut ist. Die Schlackenschmelze wird bei Temperaturen zwischen 1300° und 1600° C vom Druckfluid erfaßt, wobei durch Einstellung des entsprechenden Unterdruckes in der Kammer 20 des Drosselrohres 3 Druckstösse bzw. Impulse erzielt werden, welche im Ultraschallbereich liegen können. Auf diese Weise lassen sich Schlackentröpfchen mit Durchmessern von 1 µm realisieren.

## Patentansprüche

1. Verfahren zum Granulieren von flüssigen Schlackenschmelzen, insbesondere Hochofenschlacke, bei welcher die Schmelze (2) über einen Schlackentundish (1) in eine Kühlkammer ausgestossen wird und zum Ausstoß der flüssigen Schlacke (2) Fluid unter Druck, insbesondere Druckgas, Dampf oder Druckwasser in Richtung des Schlackenaustritts (6) eingepreßt wird, **dadurch gekennzeichnet, daß** der Druckfluidstrahl in ein in das Schlackenbad eintauchendes Drosselrohr (3) mündet, dessen Unterkante in Höhenrichtung (4) verstellbar gelagert ist.

2. Verfahren nach Anspruch 1, **dadurch gekennzeichnet, daß** der die Mündung des Druckfluidstrahles umgebende Raum des Drosselrohres (3) unter Unterdruck gehalten wird.

3. Verfahren nach Anspruch 1 oder 2, **dadurch gekennzeichnet, daß** der Lanze (7) Gas bzw. Heißgas unter einem Druck von 3 bis 7 bar zugeführt wird.

4. Verfahren nach Anspruch 1, 2 oder 3, **dadurch gekennzeichnet, daß** die in den Hohlraum des Drosselrohres (3) eingesaugte Luftmenge zur Ausbildung von Schwingungsimpulsen bemessen ist.

5. Einrichtung zum Granulieren von flüssigen Schlackenschmelzen, insbesondere Hochofenschlacke, bei welcher die Schmelze (2) über einen Schlackentundish (1) in eine Kühlkammer ausgestossen wird und zum Ausstoß der flüssigen Schlacke Fluid unter Druck, insbesondere Druckgas, Dampf oder Druckwasser in Richtung des Schlackenaustritts (6) mittels einer Lanze (7) auf- oder eingebracht wird, **dadurch gekennzeichnet, daß** die Lanze (7) von einem höhenverstellbaren Drosselrohr (3) umgeben ist, dessen Unterkante (5) in das Schlackenbad (2) im Tundish (1) eintaucht und einen Drosselquerschnitt zwischen Schlackenaustritt (6) und Schlackenbad (2) ausbildet.

6. Vorrichtung nach Anspruch 5, **dadurch gekennzeichnet, daß** das Drosselrohr (3) an der dem Schlackenbad (2) abgewandten Seite geschlossen ausgebildet ist und über ein einstellbares und verschließbares Drosselventil (19) mit einer Gasleitung, insbesondere einer Luftleitung, verbunden ist.

7. Vorrichtung nach Anspruch 5 oder 6, **dadurch gekennzeichnet, daß** das Drosselrohr (3) als Resonanzrohr ausgebildet ist, dessen Länge und dessen Drosselquerschnitt zum Ansaugen von Luft zur Ausbildung von Ultraschallschwingungen dimensioniert sind.

8. Vorrichtung nach Anspruch 5, 6 oder 7, **dadurch gekennzeichnet, daß** an die Austrittsöffnung (6) des Schlackentundish (1) wenigstens ein Strahlungskühler (9) und eine Austragsschleuse (15) für Granulat angeschlossen sind.

9. Vorrichtung nach Anspruch 8, **dadurch gekennzeichnet, daß** ein erster Strahlungskühler (9) als Hochdruck-Strahlungsdampfkessel für einen Druckbereich des Speisewassers zwischen 10 und 220 bar und einem Dampfdruck zwischen 10 und 220 bar bei Temperaturen zwischen 200° und 400° C ausgelegt ist.

10. Vorrichtung nach einem der Ansprüche 5 bis 9, **dadurch gekennzeichnet, daß** ein anschließender zweiter Strahlungskühler (10) als Konvektions-Dampfkessel ausgebildet ist.

## Claims

1. A method for granulating liquid slag melts, in particular blast furnace slag, wherein the melt (2) is ejected into a cooling chamber via a slag tundish (1) and wherein fluid under pressure, in particular compressed gas, vapor or pressurized water, is injected in the direction of the slag exit (6) in order to eject said liquid slag (2), **characterized in that** the pressure fluid jet discharges into a throttle pipe (3) which is immersed in the slag bath and whose lower edge is mounted so as to be adjustable in the height direction (4).

2. A method according to claim 1, **characterized in that** the throttle pipe (3) space surrounding the pressure fluid jet discharge is kept under a negative pressure.

3. A method according to claim 1 or 2, **characterized in that** gas or hot gas is fed to the lance (7) under a pressure of 3 to 7 bars.

4. A method according to claim 1, 2 or 3, **characterized in that** the amount of air sucked into the hollow space of the throttle pipe (3) is dimensioned for the formation of oscillation pulses.

5. A device for granulating liquid slag melts, in particular blast furnace slag, in which the melt (2) is ejected into a cooling chamber via a slag tundish (1) and in which fluid under pressure, in particular compressed gas, vapor or pressurized water, is applied or introduced by means of a lance (7) in the direction of the slag exit (6) in order to eject said liquid slag, **characterized in that** the lance (7) is surrounded by a height-adjustable throttle pipe (3) whose lower edge (5) is immersed in the slag bath (2) contained in the tundish (1) and forms a throttling cross section between the slag exit (6) and the slag bath (2).

6. A device according to claim 5, **characterized in that** the throttle pipe (3) is designed to be closed on its side facing away from the slag bath (2) and is connected with a gas duct, in particular an air duct, via an adjustable and closeable throttle valve (19).

7. A device according to claim 5 or 6, **characterized in that** the throttle pipe (3) is designed as a resonance pipe whose length and whose throttling cross section are dimensioned for the sucking in of air aimed at the generation of ultrasonic vibrations.

8. A device according to claim 5, 6 or 7, **characterized in that** at least one radiation cooler (9) and a discharging sluice (15) for granulates are connected to the exit opening (6) of the slag tundish (1).

9. A device according to claim 8, **characterized in that** a first radiation cooler (9) is designed as a high-pressure radiation steam boiler for a feed water pressure ranging between 10 and 220 bars and a vapor pressure of between 10 and 220 bars at temperature of between 200° and 400°C.

10. A device according to any one of claims 5 to 9, **characterized in that** a consecutive second radiation cooler (10) is configured as a convection steam boiler.

## Revendications

1. Procédé pour la granulation de laitiers en fusion liquides, notamment de laitier de haut-fourneau, selon lequel la matière en fusion (2) est éjectée, au travers d'un avant-creuset à laitier (1), dans une chambre de refroidissement et un fluide sous pression, notamment un gaz sous pression, de la vapeur ou de l'eau sous pression, est injecté en direction de la sortie de laitier (6), pour l'éjection du laitier liquide (2), **caractérisé en ce que** le jet de fluide sous pression débouche dans un tube d'étranglement (3) qui plonge dans le bain de laitier et dont le bord inférieur est ajustable dans le sens de la hauteur (4).

2. Procédé selon la revendication 1, **caractérisé en ce que** l'espace du tube d'étranglement (3), qui entoure l'endroit où débouche le jet de fluide sous pression, est maintenu sous dépression.

3. Procédé selon la revendication 1 ou 2, **caractérisé en ce que** la lance (7) est alimentée par un gaz ou un gaz chaud sous une pression de 3 à 7 bars.

4. Procédé selon la revendication 1, 2 ou 3, **caractérisé en ce que** la proportion d'air introduite par aspiration dans l'espace intérieur du tube d'étranglement (3) est dosée en vue de la formation d'impulsions vibratoires.

5. Dispositif pour la granulation de laitiers en fusion liquides, notamment de laitier de haut-fourneau, selon lequel la matière en fusion (2) est éjectée au travers d'un avant-creuset à laitier (1), dans une chambre de refroidissement et, pour assurer l'éjection du laitier liquide, un fluide sous pression, notamment un gaz sous pression, de la vapeur ou de l'eau sous pression, est appliqué ou introduit au moyen d'une lance (7) dans la direction de la sortie de laitier (6), **caractérisé en ce que** la lance (7) est entourée d'un tube d'étranglement (3) ajustable en hauteur, dont le bord inférieur (5) plonge dans le bain de laitier (2), à l'intérieur de l'avant-creuset (1), et ledit tube définissant une section d'étranglement entre la sortie de laitier (6) et le bain de laitier (2).

6. Dispositif selon la revendication 5, **caractérisé en ce que** le tube d'étranglement (3) est fermé du côté tourné à l'opposé du bain de laitier (2) et est relié à un conduit de gaz, notamment à un conduit d'air, au travers d'une soupape d'étranglement (19) réglable et obturable.

7. Dispositif selon la revendication 5 ou 6, **caractérisé en ce que** le tube d'étranglement (3) est un tube à résonance, dont la longueur et la section d'étranglement sont dimensionnées pour l'aspiration d'air en vue de la formation de vibrations ultrasonores.

8. Dispositif selon la revendication 5, 6 ou 7, **caractérisé en ce qu'**à l'ouverture de sortie (6) de l'avant-creuset à laitier (1), sont raccordés au moins un refroidisseur par rayonnement (9) et un sas de décharge (15) pour les granulés.

9. Dispositif selon la revendication 8, **caractérisé en ce qu'**un premier refroidisseur par rayonnement (9) est élaboré sous forme d'une chaudière de vapeur à rayonnement à haute pression pour une plage de pressions de l'eau d'alimentation comprise entre 10 et 220 bars et une pression de vapeur comprise entre 10 et 220 bars, à des températures comprises entre 200° et 400°C.

10. Dispositif selon l'une des revendications 5 à 9, **caractérisé en ce qu'**un second refroidisseur par rayonnement (10), placé immédiatement à la suite, est conçu sous forme d'une chaudière de vapeur à convexion.
